# FASCICULE DE BREVET EUROPEEN

(11) **EP 2 193 509 B1**
(45) Date de publication et mention de la délivrance du brevet: **24.10.2018**
(21) Numéro de dépôt: 08760232.2
(22) Date de dépôt: 29.05.2008
(51) Int. Cl.: G07F 17/42, G07B 5/00, G07B 15/00, G07G 1/00, G06Q 20/34, G06Q 20/36

(54) **TERMINAL DE BILLETTIQUE EMBARQUE**
ONBOARD-COMPUTER-TICKETING-ENDGERÄT
ONBOARD COMPUTER TICKETING TERMINAL

(30) Priorité: 22.06.2007 FR 0704505
(43) Date de publication de la demande: 09.06.2010
(73) Titulaire: Revenue Collection Systems France SAS, 91220 Plessis-Pâté (FR)
(72) Inventeur: DELVILLE, Florence, 91000 Evry (FR)
(74) Mandataire: Lucas, Laurent Jacques
(86) Numéro de dépôt international: PCT/EP2008/056641
(87) Numéro de publication internationale: WO 2009/000607

(56) Documents cités:
- WO-A-00/70538
- WO-A-01/38098
- WO-A-2004/102494
- DE-A1- 10 356 688
- US-A- 4 977 502
- US-A1- 2005 087 424
- US-A1- 2005 156 024

## Description

La présente invention concerne un terminal de billettique embarqué notamment à bord d'un véhicule de transport en commun. Le terminal de billettique permet notamment de mettre en oeuvre des applications de vente de tickets de transport.

Les systèmes de billettique recouvrent un ensemble d'équipements destinés à traiter des titres de transport associés à une fourniture et à une exécution de prestations de transport de personnes.

Parmi les systèmes de billettique usuels se trouvent notamment des systèmes de vente et de validation de titres de transport. Ces systèmes de vente et de validation de titre de transport peuvent être des automates de vente, des logiciels de vente, des appareils de validation de titre de transport, des équipements portables de contrôleurs, des portillons de métro.

Les véhicules de transport en commun comme les bus ou les tramways utilisent généralement un terminal embarqué comportant une unité centrale, un afficheur et une unité de vente qui peut être optionnelle.

Un terminal embarqué à bord d'un véhicule de transport en commun doit répondre à des exigences de performances notamment en terme de processeur et de mémoire, intégrés dans le terminal.

D'autre part, les contraintes liées à l'implantation dans un environnement mobile sont fortes. En effet, le terminal est soumis à des chocs, des vibrations ainsi qu'à une gamme de températures étendue. Des sous-systèmes électroniques du terminal sont donc notamment adaptés à ces contraintes. Les sous-systèmes électroniques peuvent être par exemple des imprimantes, des afficheurs, des cartes électroniques.

D'autre part, il existe des contraintes d'installation propres à chaque opérateur de transport et à chaque modèle de véhicule de transport.

Actuellement, on trouve deux principaux types de terminaux embarqués : un terminal intégré et un terminal possédant une architecture répartie.

Un premier type de terminal embarqué est un terminal intégré comprenant dans un même boîtier : une unité centrale, un écran de visualisation pour un conducteur et une unité de vente.

Le premier type de terminal est un équipement peu modulaire et permettant peu d'évolutions matérielles. En effet, l'ensemble des cartes électroniques étant intégrées dans l'équipement, il est difficilement envisageable de faire évoluer les ressources matérielles.

Le premier type de terminal est en général installé sur un tableau de bord d'un véhicule de transport ou à côté du tableau de bord. Or l'espace disponible au niveau d'un poste de conduite est très restreint. L'installation de ce type de terminal est rendue particulièrement difficile en raison de son encombrement important.

D'autre part, le premier type de terminal pose un problème d'ergonomie d'utilisation dû au mauvais positionnement de l'écran par rapport au conducteur ou au passager. En effet, le premier type de terminal ne peut pas être adapté à différentes implantations suivant les différents modèles de véhicules de transport.

Un deuxième type de terminal est un terminal possédant une architecture répartie comprenant une unité centrale d'une part et d'autre part, un écran conducteur déporté par rapport à l'unité centrale.

L'unité centrale peut être installée à bord de véhicules de transport dans des armoires techniques par exemple sous le tableau de bord ou dans des voussoirs. L'écran seul peut être installé sur le tableau de bord, simplifiant ainsi les procédures d'installations du terminal.

Ce type de terminal possède une très bonne ergonomie, l'écran étant facile à installer et prenant peu de place dans le poste de conduite. Il peut ainsi être placé de manière ergonomique par rapport au positionnement du conducteur et des passagers.

Cependant, cette architecture a des fonctionnalités plus réduites et ne comporte notamment pas de module de vente.

Le document US2005/087424 divulgue un terminal de billettique, embarqué à bord d'un véhicule de transport, qui comporte une interface conducteur orientable.

Un but de l'invention est notamment de pallier les inconvénients précités. A cet effet, l'invention a pour objet un terminal de billettique embarqué notamment à bord d'un véhicule de transport. Le terminal de billettique comporte un corps équipé d'au moins :
- un lecteur de carte sans contact ;
- une imprimante incorporée dans ledit corps, une sortie papier de l'imprimante s'effectuant par une fente pratiquée dans le corps du terminal, l'orientation de la sortie papier de l'imprimante se faisant par une rotation de l'imprimante par rapport audit corps selon un axe sensiblement vertical;
- une interface client orientable, l'orientation de l'interface ckient étant réalisée par une deuxième rotation par rapport audit corps autour d'un deuxième axe sensiblement vertical;
- une interface conducteur orientable.

L'imprimante effectue par exemple une rotation autour du premier axe afin de placer correctement la sortie papier de l'imprimante par rapport à un passager.

Le terminal de billettique peut être relié par une ou plusieurs interfaces à une unité centrale de traitement, distante du terminal de billettique.

Un emplacement de lecture de carte sans contact et une antenne de détection de la présence d'une carte sans contact sur l'emplacement de lecture, par exemple reliés au lecteur de carte sans contact, sont notamment situés sur une face supérieure sensiblement horizontale du terminal de billettique.

L'interface client peut comporter un écran orientable, situé par exemple sur une face supérieure sensiblement horizontale du terminal de billettique.

L'interface conducteur peut comporter un écran orientable, physiquement solidaire du terminal de billettique.

L'interface conducteur peut comporter une dalle tactile.

L'orientation de l'interface conducteur peut s'effectuer par une troisième rotation selon un troisième axe sensiblement horizontal.

L'interface conducteur peut pivoter autour du troisième axe passant par la partie supérieure de l'interface conducteur.

La première rotation et la deuxième rotation peuvent être bloquées.

Le blocage de la première rotation et le blocage de la deuxième rotation peuvent être réalisés au moyen de vis démontables.

L'invention a notamment pour principal avantage de permettre une réduction des coûts de production et d'installation d'un terminal de billettique à bord d'un véhicule. Le terminal de billettique selon l'invention possède également une bonne ergonomie d'utilisation quel que soit le type de véhicule dans lequel il est implanté. L'installation du terminal de billettique selon l'invention est avantageusement simplifiée.

D'autres caractéristiques et avantages de l'invention apparaîtront à l'aide de la description qui suit, donnée à titre illustratif et non limitatif, et faite en regard des dessins annexés qui représentent :
- la figure 1 : un exemple de terminal intégré selon l'art antérieur ;
- la figure 2 : un exemple d'architecture répartie d'un terminal selon l'art antérieur ;
- la figure 3 : un exemple de réalisation d'un terminal selon l'invention ;
- la figure 4 : différentes rotations possibles des éléments du terminal selon l'invention ;
- la figure 5a : un principe de positionnement des différents éléments du terminal et de positionnement du terminal selon l'invention lui-même ;
- la figure 5b : un exemple d'adaptation du terminal selon l'invention à un poste de conduite à gauche ;
- la figure 5c : un exemple d'adaptation du terminal selon l'invention à un poste de conduite à droite ;
- la figure 6a : un premier exemple de positionnement d'un écran conducteur du terminal selon l'invention ;
- la figure 6b : un deuxième exemple de positionnement d'un écran conducteur du terminal selon l'invention.

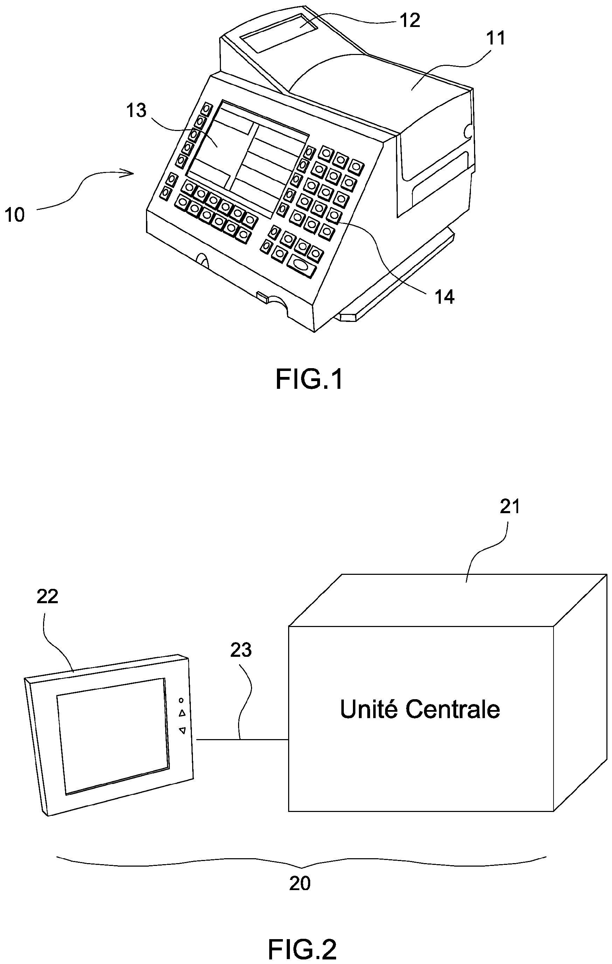

La figure 1 représente un exemple de terminal de billettique intégré 10 selon l'art antérieur. Le terminal de billettique intégré 10 peut être embarqué à bord d'un véhicule de transport en commun par exemple. Le terminal de billettique intégré 10 comporte dans un même boîtier une première unité centrale, non représentée sur la figure 1. La première unité centrale comporte par exemple une première carte processeur, des cartes d'interfaces et des cartes mémoires. La première unité centrale est notamment chargée de traiter différentes données liées à différentes fonctions de billettique. Le terminal intégré 10 comporte un premier lecteur de carte sans contact 11 ainsi qu'une première interface client 12 présentée sous la forme d'un premier écran d'affichage. Le premier lecteur de carte sans contact 11 peut permettre à la première unité centrale de vérifier la validité d'un titre de transport sans contact ou d'effectuer une vente d'un produit, sur le titre de transport sans contact présenté sur le lecteur de carte sans contact 11. La première interface client 12 peut permettre à un client de vérifier des informations stockées sur son titre de transport. Un deuxième écran d'affichage 13 est une interface entre un conducteur et le terminal de billettique intégré 10. Un clavier 14 permet au conducteur de saisir différents paramètres.

Les principaux inconvénients de ce terminal de billettique intégré 10 selon l'art antérieur sont de disposer d'une mauvaise ergonomie par rapport au conducteur ainsi qu'aux passagers, et d'avoir un encombrement important entraînant des difficultés de positionnement lors de l'installation à bord du véhicule de transport en commun. De plus, le terminal de billettique intégré 10 n'est pas facilement adaptable à différents types de véhicules de transport en commun. Le terminal de billettique intégré 10 possède également peu de capacités en terme d'évolution matérielle.

La figure 2 représente un exemple d'architecture répartie d'un terminal 20 selon l'art antérieur. Le terminal 20 comporte notamment une deuxième unité centrale 21, et un écran 22 déporté par rapport à l'unité centrale 21. Le terminal 20 comporte une première liaison filaire 23 de transmission d'un signal vidéo entre la deuxième unité centrale 21 et l'écran 22. Un terminal du type du terminal 20 a des fonctions limitées à des fonctions d'affichage et de saisie. L'écran 22 intègre par exemple une dalle tactile. Un terminal du type du terminal 20 ne peut donc être utilisé par des véhicules de transport en commun ayant besoin d'une fonction de vente de titres de transport. En effet, le terminal 20 ne comporte pas de lecteur de carte sans contact par exemple, ni d'imprimante.

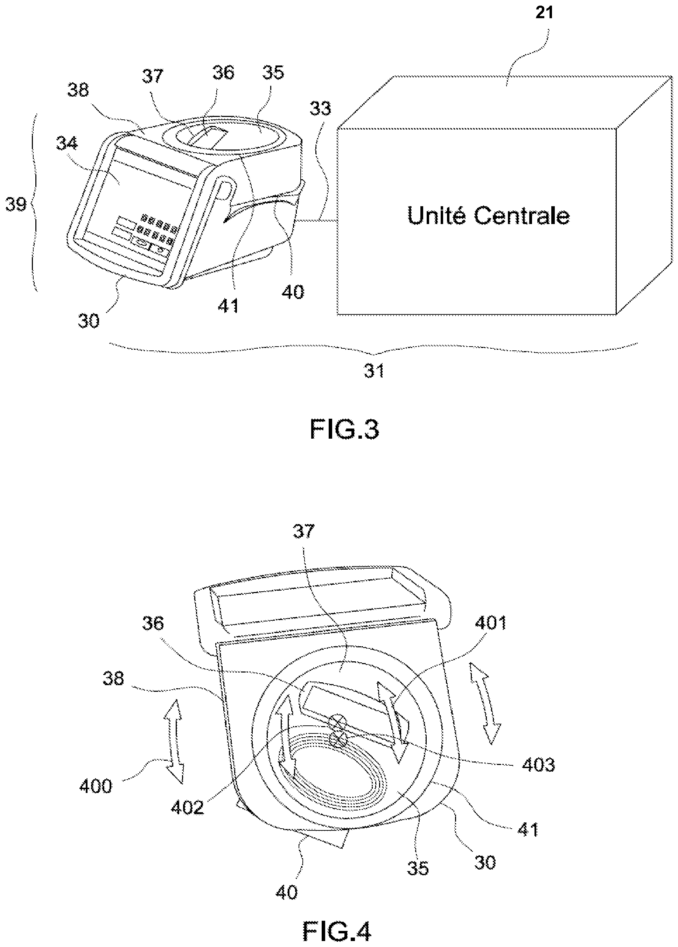

La figure 3 représente un exemple de réalisation d'un terminal de billettique 30 selon l'invention. Le terminal de billettique 30 fait partie d'une architecture répartie 31 comportant :
- le terminal de billettique 30 ;
- la deuxième unité centrale 21 comportant notamment une deuxième carte processeur, des cartes d'interfaces, des cartes mémoires contenant des logiciels de billettique ;
- une liaison 33 entre le terminal de billettique 30 et la deuxième unité centrale 21.

Le terminal de billettique 30 peut comporter notamment :
- une unité de vente,
- une troisième carte processeur non représentée sur la figure 3 ;
- une interface conducteur 34 à destination du conducteur du véhicule de transport,

L'unité de vente peut comporter notamment :
- un deuxième lecteur de carte sans contact, non représenté sur la figure 3, et son antenne 41 ;
- un emplacement 35 pour la lecture d'une carte sans contact ;
- un afficheur client 36 ;
- une imprimante non représentée sur la figure 3 ;
- des LED 37, acronyme de l'expression anglo-saxonne Light Emitting Diode, signifiant diode électroluminescente ;
- un avertisseur sonore non représenté sur la figure 3 ;

La liaison 33 peut être une deuxième liaison filaire réalisant par exemple une interface unique de type Ethernet entre le terminal de billettique 30 et la deuxième unité centrale 21. La liaison 33 peut être une liaison bidirectionnelle permettant le passage de toutes les informations destinées à un ensemble de sous-systèmes électroniques du terminal de billettique 30. Les sous-systèmes électroniques sont par exemple l'interface conducteur 34, l'afficheur client 36, l'imprimante, les LED 37, l'avertisseur sonore, le deuxième lecteur de carte sans contact. La liaison Ethernet 33 permet notamment une distance, entre le terminal de billettique 30 et la deuxième unité centrale 21, de l'ordre de cent mètres. Cette distance permet de positionner la deuxième unité centrale 21 dans un endroit du véhicule de transport distant du poste de conduite, libérant ainsi une place utile importante au niveau du poste de conduite. Une interface unique entre le terminal de billettique 30 et la deuxième unité centrale 21 permet également de réduire des coûts d'installation liés au câblage de l'ensemble.

Dans d'autres modes de réalisation de l'invention, la liaison 33 peut être :
- composée de plusieurs liaisons filaires ;
- une liaison sans-fil comme une liaison radio, de type WIFI par exemple.

Différentes liaisons filaires peuvent être utilisées :
- une liaison LVDS, acronyme de l'expression anglo-saxonne Low Voltage Differential Signaling, signifiant signalisation différentielle à basse tension, pouvant être utilisée pour la liaison 33 avec l'interface conducteur 34 ;
- une liaison série peut également être utilisée pour la liaison 33 avec la troisième carte processeur du terminal de billettique 30.

Le deuxième lecteur de carte sans contact peut se situer à l'intérieur d'un corps 39 du terminal de billettique 30. Le deuxième lecteur de carte sans contact permet de lire des informations d'un titre de transport sans contact. Le deuxième lecteur de carte sans contact peut également être utilisé afin d'écrire des informations sur un titre de transport sans contact. Le deuxième lecteur de carte sans contact peut effectuer un rechargement d'un porte-monnaie électronique de transport avec un montant pré-payé. Le deuxième lecteur de carte sans contact peut aussi effectuer une modification de la durée de validité après un paiement par un porteur de titre de transport par exemple.

L'emplacement 35 pour la lecture d'une carte sans contact, dans un mode de réalisation du terminal de billettique 30, peut être situé sur une face supérieure 38 du corps 39 du terminal de billettique 30. Dans un mode de réalisation préféré la face supérieure 38 est horizontale. L'antenne 41 du deuxième lecteur de carte sans contact peut entourer par exemple l'emplacement 35 afin qu'une carte sans contact posée sur l'emplacement 35 puisse être détectée par le lecteur de carte sans contact par l'antenne 41.

L'afficheur client 36 peut se présenter sous la forme d'un afficheur graphique. L'afficheur client 36 est situé par exemple au-dessus de l'emplacement 35 pour la lecture d'une carte sans contact, sur la face supérieure 38 du corps 39 du terminal de billettique 30. L'afficheur client 36 peut permettre de diffuser des informations au client comme la durée de validité du titre de transport, une somme restante dans le porte-monnaie électronique de transport, la validité ou l'invalidité du titre de transport, une somme à payer.

Une ou plusieurs LED 37 peuvent permettre de donner au porteur d'un titre de transport sans contact une information sur la validité du titre de transport si le titre de transport a été préalablement présenté devant l'emplacement 35 pour la lecture d'une carte sans contact. Par exemple une LED 37 rouge allumée peut signifier que le titre de transport présenté n'est pas valide. Une LED 37 verte allumée peut signifier que le titre de transport présenté est valide. Et une LED 37 jaune allumée peut signifier que le titre de transport présenté n'est pas lisible par exemple. La ou les LED 37 complètent donc les informations données par l'afficheur client 36.

L'avertisseur sonore peut émettre un premier son lorsque le titre de transport présenté n'est pas valide, un deuxième son lorsque le titre de transport présenté est valide, un troisième son lorsque le titre de transport présenté est illisible, par exemple.

L'avertisseur sonore, la ou les LED 37, l'afficheur client 36, l'emplacement 35 de lecture de carte sans contact font notamment partie d'une deuxième interface client permettant de donner ainsi des informations à un client porteur d'un titre de transport par exemple.

L'imprimante peut se situer par exemple à l'intérieur du corps 39 du terminal de billettique 30. Une sortie papier 40 peut se faire par un côté du corps 39 du terminal de billettique 30. La sortie papier 40 peut par exemple s'effectuer par une fente horizontale pratiquée dans le corps 39 du terminal de billettique 30. L'imprimante peut permettre d'imprimer un ticket papier ou un reçu pour une transaction effectuée à partir du terminal de billettique 30.

L'interface conducteur 34 permet au conducteur de saisir des données comme un crédit à ajouter sur le porte-monnaie électronique de transport. L'interface conducteur 34 permet également au conducteur de disposer de certaines informations comme le prix d'une course par exemple. Afin de réaliser à la fois des fonctions d'affichage et de saisie d'informations, l'interface conducteur 34 peut comporter un écran associé par exemple à une dalle tactile.

La troisième carte processeur de terminal de billettique 30, non représentée sur la figure 3, permet notamment de gérer différentes interfaces entre les différents périphériques du terminal de billettique 30 comme l'interface conducteur 34, l'imprimante, l'avertisseur sonore, le lecteur de carte sans contact, les LED 37, l'afficheur client 36, l'antenne 41 par exemple.

L'antenne 41 permet au terminal de billettique 30 de détecter les cartes sans contact. Elle est directement reliée au deuxième lecteur de carte sans contact.

Le terminal de billettique 30 peut par exemple permettre de remplir une ou plusieurs des fonctions détaillées par la suite.

Le terminal de billettique 30 permet une gestion du service du conducteur du véhicule. Par exemple, lors d'une prise de service par un conducteur, le conducteur peut présenter une carte agent au deuxième lecteur de carte sans contact afin de s'identifier. Le chauffeur peut également saisir un mot de passe au moyen de l'interface conducteur 34. Cette identification permet au système central par exemple de gérer les affectations des conducteurs aux différents véhicules ainsi que leurs planifications de travail. Un conducteur peut par exemple saisir un identifiant d'un parcours qu'il va effectuer. Le terminal de billettique 30 peut donc servir à effectuer une gestion d'itinéraires du véhicule de transport. La gestion des itinéraires peut utiliser des moyens de localisation, par exemple un système de localisation par satellite ou GPS, signifiant Global Positioning System en langage anglo-saxon, afin de situer le véhicule par rapport à un itinéraire prédéterminé. L'interface conducteur 34 peut permettre par exemple au conducteur de signaler qu'il saute un arrêt de l'itinéraire prédéterminé.

La deuxième unité centrale 21 peut être la même unité centrale que celle représentée sur la figure 2.

La deuxième unité centrale 21 peut permettre de concentrer des données en provenance de dispositifs de validation de titre de transport installés dans le véhicule de transport. Les données concentrées peuvent ensuite être envoyées au système central par l'intermédiaire d'un module WIFI intégré dans la deuxième unité centrale 21 par exemple. Les informations de validation peuvent servir à répartir des fonds, issus de paiements des usagers, entre plusieurs opérateurs de transport.

La deuxième unité centrale 21 peut permettre également une gestion des titres de transport et notamment de la validité de ces derniers. Les titres de transport peuvent être interdits par le système central en cas de vol par exemple.

La deuxième unité centrale 21 peut donc être utilisée afin de transmettre et de recevoir des données en provenance d'un système central situé dans un dépôt de véhicules de transport en commun par exemple. Les données reçues peuvent être par exemple des mises à jour logicielles ou des mises à jour de gammes tarifaires pour l'achat de titres de transport. Les données transmises peuvent par exemple être des compteurs pour des opérations réalisées sur le terminal de billettique 30. Les compteurs sont notamment utilisés par le système central afin d'effectuer des études statistiques par exemple.

Le terminal de billettique 30 peut également être utilisé afin de gérer des alarmes en provenance de différents équipements embarqués à bord du véhicule. Ceci permet au conducteur de détecter des pannes éventuelles de ces équipements. Les dispositifs de validation de titre de transport peuvent par exemple communiquer au terminal de billettique 30 un état de fonctionnement.

Ensuite le terminal de billettique 30 peut être utilisé pour une gestion de la vente et de la validation de titre de transport sans contact par exemple ainsi que pour une édition de tickets papier ou de reçus par l'intermédiaire de l'imprimante.

La figure 4 représente différentes rotations 400, 401 possibles d'éléments du terminal de billettique 30 selon l'invention. Le terminal de billettique 30 est représenté sur une vue de dessus sur la figure 4. Cette vue de dessus permet de représenter différents éléments du terminal de billettique 30 se trouvant notamment sur la face supérieure 38. Parmi ces éléments, sont représentés :
- l'emplacement 35 pour la lecture de carte sans contact,
- l'afficheur client 36,
- les LED 37,
- l'antenne 41, et
- la sortie papier 40.

La première rotation 400 est une rotation autour d'un premier axe 402. Le premier axe 402 est par exemple perpendiculaire à la face supérieure 38 et centré par rapport au corps 39 du terminal de billettique 30. Le premier axe 402 est donc par exemple quasiment vertical. L'imprimante peut notamment effectuer une rotation autour du premier axe 402 afin de placer correctement la sortie papier 40 de l'imprimante par rapport à une position potentielle d'un client. La première rotation 400 peut être une rotation partielle par exemple. La première rotation 400 peut être laissée libre durant l'installation afin de placer correctement la sortie papier 40. La première rotation 400 peut être ensuite bloquée par l'intermédiaire d'une ou plusieurs vis démontables par exemple. Il n'est pas nécessaire que la sortie papier 40 puisse tourner en cours d'utilisation du terminal du billettique 30.

La deuxième rotation 401 est notamment une rotation d'un ensemble d'éléments composé par exemple : d'un emplacement 35 de lecture de carte sans contact, de l'afficheur client 36, des LED 37. Cet ensemble d'éléments fait notamment partie d'une deuxième interface client. La deuxième rotation 401 peut s'effectuer autour d'un deuxième axe 403 notamment perpendiculaire à la face supérieure 38 et situé sensiblement au centre du corps 39 du terminal de billettique 30. Le deuxième axe de rotation 403 peut être par exemple distinct du premier axe de rotation 402. Le deuxième axe 403 est par exemple quasiment vertical. La deuxième rotation 401 peut permettre au cours de l'installation du terminal de billettique 30 de positionner correctement la deuxième interface client par rapport à un positionnement potentiel d'un client dans le véhicule. La deuxième rotation 401 peut également être bloquée au moyen de vis démontables au cours de l'installation, après positionnement de la deuxième interface client en fonction de la position du terminal de billettique 30 dans le véhicule.

Les rotations 400, 401 permettent de régler au mieux, lors d'une phase d'installation du terminal de billettique 30, des angles de vue et des interactions possibles entre un conducteur et un client ou un passager et le terminal de billettique 30.

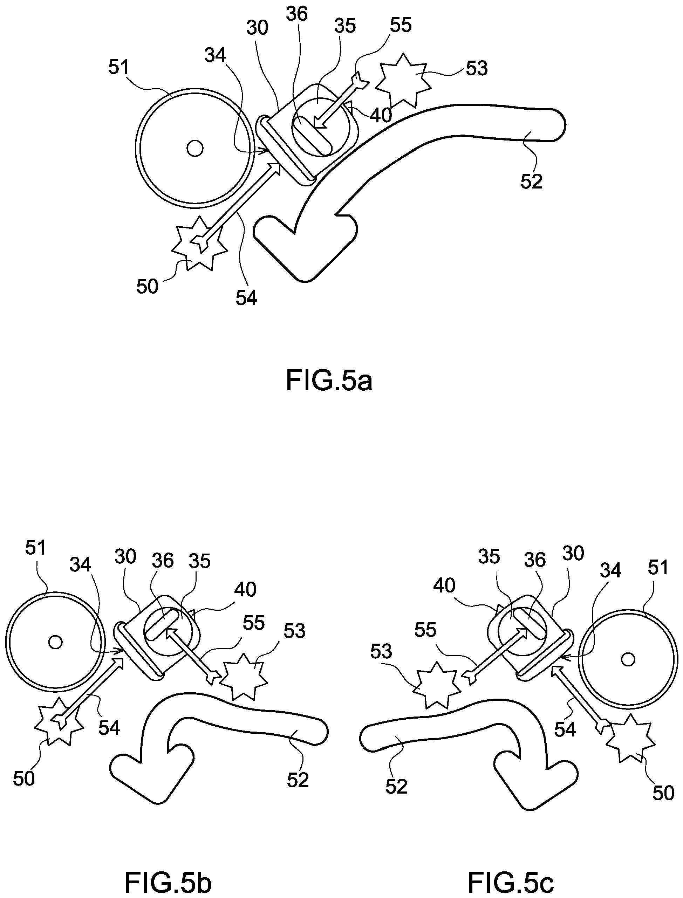

Les figures 5a, 5b, 5c représentent un principe de positionnement de différents éléments du terminal de billettique 30 ainsi que le positionnement du terminal de billettique 30.

Le terminal de billettique 30 est positionné en fonction notamment de la position d'un conducteur 50 du véhicule de transport. Le terminal de billettique 30 est également positionné en fonction d'un positionnement d'un volant 51 du véhicule de transport par rapport à un flux de passagers 52 entrant par exemple dans le véhicule, ainsi que par rapport à un passager 53 utilisant le terminal de billettique 30.

D'une manière générale, le conducteur 50 se situe en face du volant 51. Un premier angle de vue 54 de l'interface conducteur 34 par le conducteur 50 est notamment perpendiculaire à l'interface conducteur 34.

Sur la figure 5a, le terminal de billettique 30 se situe à droite du volant 51, l'interface conducteur 34 faisant face au conducteur 50. Le flux de passagers 52 sur la figure 5a vient de la droite du volant 51, perpendiculairement à un axe passant par le conducteur 50 et le volant 51, et va vers l'arrière du véhicule, derrière le conducteur 50. Le passager 53 se situe en dehors du flux de passagers 52, face au conducteur 50. Un deuxième angle de vue 55 est l'angle de vue de l'afficheur client 36 par le passager 53. Dans une première disposition du terminal de billettique 30 le deuxième angle de vue 55 est positionné à environ cent quatre-vingt degrés par rapport au premier angle de vue 54. Dans ce cas, l'afficheur client 36 est parallèle à l'interface conducteur 34.

Sur la figure 5b, le flux de passagers 52 provient de la droite du conducteur 50 et va en direction de l'arrière du véhicule, derrière le conducteur 50. Ceci se produit par exemple dans un véhicule ayant une conduite à gauche. Le passager 53 peut alors se positionner à droite du flux de passagers 52. Le deuxième angle de vue 55 a une différence de quatre-vingt-dix degrés, en tournant dans le sens trigonométrique, avec le premier angle de vue 54. L'interface conducteur 34 se trouve donc dans ce cas perpendiculaire à l'afficheur client 36.

Sur la figure 5c, le volant 51 est positionné à droite du flux de passagers 52. C'est par exemple le cas pour un véhicule possédant une conduite à droite. Le flux de passagers 52 provient par exemple de la gauche du conducteur 50 et va en direction de l'arrière du véhicule, derrière le conducteur 50. Dans ce cas, le passager 53 peut se positionner à gauche du volant 51, en dehors du flux de passagers 52. Le deuxième angle de vue 55 se trouve alors positionné à deux cent soixante dix degrés par rapport au premier angle de vue 54. L'interface conducteur 34 se trouve donc perpendiculaire à l'afficheur client 36.

Le positionnement de la sortie papier 40 s'effectue généralement face au passager 53.

Le terminal de billettique 30 offre donc une grande diversité de positionnements de l'interface conducteur 34 et de la deuxième interface client. Ceci permet donc d'adapter le terminal de billettique 30 à différents véhicules de transport en commun et à différents types de conduite.

La prise en compte du flux de passagers 52 par rapport au passager 53 utilisant le terminal de billettique 30 et par rapport au conducteur 50 permet de faciliter l'accès du véhicule de transport pour une montée des passagers par exemple. L'accès ainsi facilité est plus rapide, les passagers entrant pouvant par exemple valider leur titre de transport sur un valideur positionné un peu plus loin dans le véhicule.

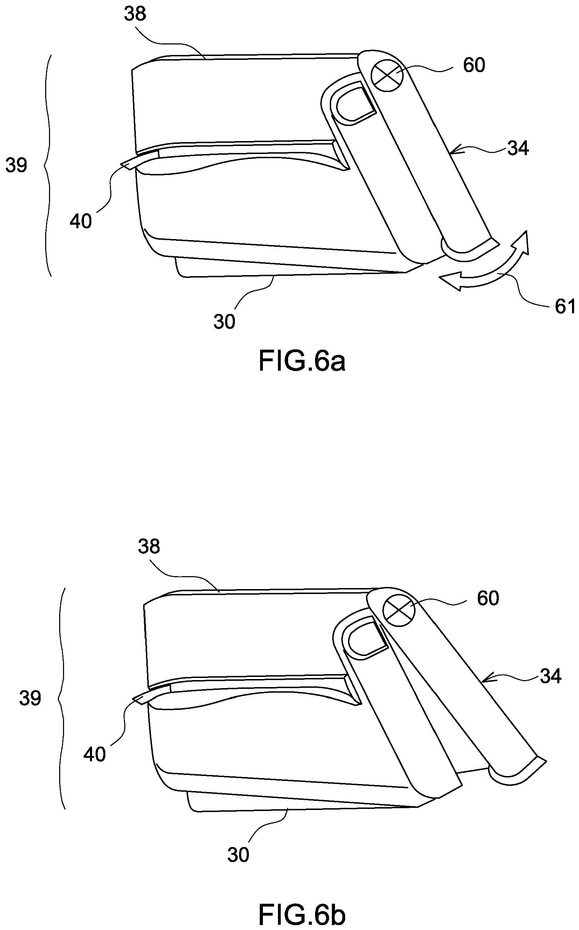

Les figures 6a et 6b représentent des exemples de positionnement d'une interface conducteur 34 du terminal de billettique 30 selon l'invention. Sur les figures 6a et 6b, le terminal de billettique 30 est représenté vu de profil. Sur les figures 6a et 6b, sont notamment représentés le corps 39 du terminal de billettique 30 vu de profil, la face supérieure 38, l'interface conducteur 34, la sortie papier 40.

L'interface conducteur 34 peut pivoter suivant un troisième axe de rotation 60 situé sur la partie supérieure de l'interface conducteur 34. Le troisième axe de rotation 60 est solidaire par exemple de la face supérieure 38. L'interface conducteur 34 est donc reliée au corps 39 du terminal de billettique 30 par l'intermédiaire de l'axe de rotation 60. L'interface conducteur 34 peut pivoter d'environ une dizaine de degrés par exemple. L'interface conducteur 34 peut ainsi effectuer une troisième rotation 61. Une fois la troisième rotation 61 de l'interface conducteur 34 effectuée, l'interface conducteur 34 reste dans la position souhaitée grâce à des moyens de blocage connus par ailleurs. Le positionnement de l'interface conducteur 34 n'est pas bloqué à l'installation, ce qui permet à chaque conducteur 50 du véhicule de positionner l'interface conducteur 34 comme il le souhaite. Ainsi un même poste de conduite peut être utilisé par des conducteurs de tailles différentes, dans des conditions de luminosité très variées. L'ergonomie du poste de conduite est donc améliorée par la rotation possible de l'interface conducteur 34.

Ce principe de rotation de l'interface conducteur 34 permet de réduire les coûts d'études d'ergonomie du poste de conduite. Ceci permet également de réduire l'outillage nécessaire à l'installation du terminal de billettique 30 afin de le positionner correctement.

Les différents principes de rotation des éléments du terminal de billettique 30 permettent avantageusement de réduire les coûts de production et d'installation d'un tel équipement. De même l'installation est avantageusement plus simple grâce aux principes de rotation. De plus le terminal de billettique 30 peut être adapté à différents types de véhicules et à différents types de conduite tout en ayant une bonne ergonomie d'utilisation tant pour le conducteur 50 que pour les passagers 53.

Le terminal de billettique 30 selon l'invention présente avantageusement une modularité : chaque sous-système, tel que l'imprimante, le lecteur sans contact, l'afficheur passager, les LED 37, l'interface client, étant optionnel. La modularité du terminal de billettique 30 facilite son adaptation à différentes exigences des opérateurs de transports en commun.

De plus la possibilité d'utiliser la même unité centrale 21 en association avec différents types de terminal permet de réduire les coûts de production mais également les coûts d'achat pour un client souhaitant faire évoluer son équipement avec un nouveau terminal de billettique 30.

Le terminal de billettique 30 est également réalisé de manière très compacte afin d'avoir un encombrement le plus faible possible, ceci facilite avantageusement son implantation dans le poste de conduite confiné d'un véhicule de transport en commun.

Une interface unique entre la deuxième unité centrale 21 et le terminal de billettique 30 peut permettre une réduction des coûts de câblage lors de l'installation du terminal de billettique 30 à bord d'un véhicule.

## Revendications

1. Terminal de billettique (30) embarqué à bord d'un véhicule de transport, **caractérisé en ce qu'**il comporte un corps (39) équipé d'au moins :
• un lecteur de carte sans contact ;
• une imprimante incorporée dans ledit corps (39), une sortie papier (40) de l'imprimante s'effectuant par une fente pratiquée dans le corps (39), l'orientation de la sortie papier de l'imprimante se faisant par une rotation (400) de l'imprimante par rapport audit corps selon un premier axe (402) sensiblement vertical,
• une interface client (36, 37) orientable, l'orientation de l'interface client étant réalisée par une deuxième rotation par rapport audit corps (401) autour d'un deuxième axe (403) sensiblement vertical,
• une interface conducteur (34) orientable.

2. Terminal de billettique (30) selon la revendication 1, **caractérisé en ce que** l'imprimante peut effectuer une première rotation (400) autour du premier axe (402) afin de placer correctement la sortie papier (40) de l'imprimante par rapport à un passager.

3. Terminal de billettique (30) selon l'une quelconque des revendications précédentes, **caractérisé en ce qu'**il peut être relié par une ou plusieurs interfaces (33) à une unité centrale de traitement (21), distante dudit terminal de billettique (30).

4. Terminal de billettique (30) selon l'une quelconque des revendications précédentes, **caractérisé en ce qu'**un emplacement (35) de lecture de carte sans contact et une antenne (41) de détection de la présence d'une carte sans contact sur l'emplacement de lecture (35), reliés au lecteur de carte sans contact, sont situés sur une face supérieure (38) sensiblement horizontale du terminal de billettique (30).

5. Terminal de billettique (30) selon l'une quelconque des revendications précédentes, **caractérisé en ce que** l'interface client (36, 37) comporte un écran (36) orientable, situé sur une face supérieure (38) sensiblement horizontale du terminal de billettique (30).

6. Terminal de billettique (30) selon l'une quelconque des revendications précédentes, **caractérisé en ce que** l'interface conducteur (34) comporte un écran orientable, physiquement solidaire du terminal de billettique (30).

7. Terminal de billettique (30) selon la revendication 6, **caractérisé en ce que** l'interface conducteur (34) comporte une dalle tactile.

8. Terminal de billettique (30) selon la revendication 1 **caractérisé en ce que** l'orientation de l'interface conducteur (34) s'effectue par une troisième rotation (61) selon un troisième axe (60) sensiblement horizontal.

9. Terminal de billettique (30) selon la revendication 8, **caractérisé en ce que** l'interface conducteur (34) pivote autour du troisième axe (60) passant par la partie supérieure de l'interface conducteur (34).

10. Terminal de billettique (30) selon la revendication 1, **caractérisé en ce que** la première rotation (400) et la deuxième rotation (401) sont bloquées.

11. Terminal de billettique (30) selon la revendication 10, **caractérisé en ce que** le blocage de la première rotation (400) et le blocage de la deuxième rotation (401) sont réalisés au moyen de vis démontables.

## Patentansprüche

1. Ticketing-Endgerät (30), installiert an Bord eines Transportfahrzeugs, **dadurch gekennzeichnet, dass** es ein Gehäuse (39) umfasst, das ausgestattet ist mit wenigstens:
• einem kontaktlosen Kartenleser;
• einem in dem Gehäuse (39) integrierten Drucker, wobei ein Papierausgang (40) des Druckers durch einen in dem Gehäuse (39) vorgesehenen Schlitz gegeben ist, wobei die Orientierung des Papierausgangs des Druckers durch Drehen (400) des Druckers relativ zum Gehäuse gemäß einer ersten im Wesentlichen vertikalen Achse (402) erfolgt;
• eine orientierbare Kundenschnittstelle (36, 37), wobei die Orientierung der Kundenschnittstelle durch ein zweites Drehen relativ zum Gehäuse (401) um eine zweite im Wesentlichen vertikale Achse (403) erfolgt;
• eine orientierbare Fahrzeugführerschnittstelle (34).

2. Ticketing-Endgerät (30) nach Anspruch 1, **dadurch gekennzeichnet, dass** der Drucker eine erste Drehung (400) um die erste Achse (402) ausführen kann, um den Papierausgang (40) des Druckers korrekt relativ zu einem Fahrgast zu platzieren.

3. Ticketing-Endgerät (30) nach einem der vorherigen Ansprüche, **dadurch gekennzeichnet, dass** es über eine oder mehrere Schnittstellen (33) mit einer Zentraleinheit (21) fern vom Ticketing-Endgerät (30) verbunden werden kann.

4. Ticketing-Endgerät (30) nach einem der vorherigen Ansprüche, **dadurch gekennzeichnet, dass** sich ein Ort (35) des kontaktlosen Kartenlesens und eine Antenne (41) zum Erkennen der Anwesenheit einer kontaktlosen Karte am Ableseort (35), mit dem kontaktlosen Kartenleser verbunden, auf einer im Wesentlichen horizontalen Oberseite (38) des Ticketing-Endgeräts (30) befinden.

5. Ticketing-Endgerät (30) nach einem der vorherigen Ansprüche, **dadurch gekennzeichnet, dass** die Kundenschnittstelle (36, 37) einen orientierbaren Bildschirm (36) umfasst, der sich auf einer im Wesentlichen horizontalen Oberseite (38) des Ticketing-Endgeräts (30) befindet.

6. Ticketing-Endgerät (30) nach einem der vorherigen Ansprüche, **dadurch gekennzeichnet, dass** die Fahrzeugführerschnittstelle (34) einen orientierbaren Bildschirm umfasst, der physisch in das Ticketing-Endgerät (30) integriert ist.

7. Ticketing-Endgerät (30) nach Anspruch 6, **dadurch gekennzeichnet, dass** die Fahrzeugführerschnittstelle (34) einen Touchscreen umfasst.

8. Ticketing-Endgerät (30) nach Anspruch 1, **dadurch gekennzeichnet, dass** die Orientierung der Fahrzeugführerschnittstelle (34) durch ein drittes Drehen (61) gemäß einer dritten im Wesentlichen horizontalen Achse (60) orientiert wird.

9. Ticketing-Endgerät (30) nach Anspruch 8, **dadurch gekennzeichnet, dass** die Fahrzeugführerschnittstelle (34) um die dritte Achse (60) schwenkt, die durch den oberen Teil der Fahrzeugführerschnittstelle (34) verläuft.

10. Ticketing-Endgerät (30) nach Anspruch 1, **dadurch gekennzeichnet, dass** die erste Drehung (400) und die zweite Drehung (401) gesperrt sind.

11. Ticketing-Endgerät (30) nach Anspruch 10, **dadurch gekennzeichnet, dass** das Sperren der ersten Drehung (400) und das Sperren der zweiten Drehung (401) mittels entfernbaren Schrauben erfolgen.

## Claims

1. A ticketing terminal (30) on board a transport vehicle, **characterised in that** it comprises a body (39) equipped with at least:
• one contactless card reader;
• one printer incorporated in said body (39), a paper output (40) of the printer being provided by a slot made in the body (39), the paper output of the printer being oriented by a rotation (400) of the printer relative to said body along a first substantially vertical axis (402);
• an orientable customer interface (36, 37), the customer interface being oriented by a second rotation relative to said body (401) about a second substantially vertical axis (403);
• an orientable driver interface (34).

2. The ticketing terminal (30) as claimed in claim 1, **characterised in that** the printer can perform a first rotation (400) about the first axis (402) so as to correctly place the paper output (40) of the printer in relation to a passenger.

3. The ticketing terminal (30) as claimed in any one of the preceding claims, **characterised in that** it can be connected by one or more interfaces (33) to a central processing unit (21), remote from said ticketing terminal (30).

4. The ticketing terminal (30) as claimed in any one of the preceding claims, **characterised in that** a reading point (35) for a contactless card reader and an antenna (41) for detecting the presence of a contactless card on the reading point (35), connected to the contactless card reader, are located on a substantially horizontal upper face (38) of the ticketing terminal (30).

5. The ticketing terminal (30) as claimed in any one of the preceding claims, **characterised in that** the customer interface (36, 37) comprises an orientable screen (36) located on a substantially horizontal upper face (38) of the ticketing terminal (30).

6. The ticketing terminal (30) as claimed in any one of the preceding claims, **characterised in that** the driver interface (34) comprises an orientable screen physically integral with the ticketing terminal (30).

7. The ticketing terminal (30) as claimed in claim 6, **characterised in that** the driver interface (34) comprises a touchscreen.

8. The ticketing terminal (30) as claimed in claim 1, **characterised in that** the driver interface (34) is oriented by a third rotation (61) along a third substantially horizontal axis (60).

9. The ticketing terminal (30) as claimed in claim 8, **characterised in that** the driver interface (34) pivots about the third axis (60) passing through the upper part of the driver interface (34).

10. The ticketing terminal (30) as claimed in claim 1, **characterised in that** the first rotation (400) and the second rotation (401) are blocked.

11. The ticketing terminal (30) as claimed in claim 10, **characterised in that** the blocking of the first rotation (400) and the blocking of the second rotation (401) are carried out by means of removable screws.
